# EUROPÄISCHE PATENTSCHRIFT

(11) **EP 1 982 104 B1**
(45) Veröffentlichungstag und Bekanntmachung des Hinweises auf die Patenterteilung: **30.09.2009**
(21) Anmeldenummer: 07702853.8
(22) Anmeldetag: 18.01.2007
(51) Int. Cl.: F16N 13/16, F04B 9/107, F16N 11/10

(54) **HYDRAULISCHE VORRICHTUNG MIT SCHMIERPUMPE**
HYDRAULIC DEVICE WITH A LUBRICATING PUMP
DISPOSITIF HYDRAULIQUE AVEC POMPE DE LUBRIFICATION

(30) Priorität: 10.02.2006 DE 202006002243 U
(43) Veröffentlichungstag der Anmeldung: 22.10.2008
(73) Patentinhaber: Lincoln GmbH, 69190 Walldorf (DE)
(72) Erfinder: PALUNCIC, Zdravko, 67067 Ludwigshafen (DE); GRACH, Ayzik, Chesterfield, MO 63017 (US); MANDERA, Markus, 69181 Leimen (DE)
(74) Vertreter: KEIL & SCHAAFHAUSEN Patentanwälte
(86) Internationale Anmeldenummer: PCT/EP2007/000405
(87) Internationale Veröffentlichungsnummer: WO 2007/090508

(56) Entgegenhaltungen:
- FR-A- 1 455 389
- US-A- 2 861 519
- US-A- 4 352 644
- US-B1- 6 494 347
- US-B2- 6 736 292

## Beschreibung

Die Erfindung betrifft eine hydraulische Vorrichtung, insbesondere eine hydraulische Schlagvorrichtung, mit einer Zuleitung für ein unter Druck stehendes Hydraulikfluid, bspw. ein Hydrauliköl, und mit einer Schmierpumpe, die mit der Zuleitung über einen Hydraulikeinlass strömungsverbunden ist, und die ein Pumpenelement zur Förderung von Schmierstoff, z.B. Schmierfett, aus einem Vorratsbehälter zu mindestens einer mit Schmierstoff zu versorgenden Schmierstelle der hydraulischen Vorrichtung sowie Mittel zum Erzeugen eines Pumpenhubs des Pumpenelements aufweist.

Aus der DE 20 2004 019 503 U1 ist eine Schmierpumpe bspw. für einen hydraulischen Schlaghammer bekannt, bei welcher das für den Betrieb des hydraulischen Schlaghammers eingesetzte Hydrauliköl oder dgl. auf einen Steuerkolben mit einer kleinen Kolbenfläche wirkt, der mit einem Folgekolben mit einer großen Kolbenfläche verbunden ist, der Schmierstoff zu wenigstens einer Schmierstelle des hydraulischen Schlaghammer fördert. Durch diese Differenzialkolbenanordnung kann das üblicherweise unter sehr hohem Druck stehende Hydrauliköl, das zum Betrieb des hydraulischen Schlaghammers eingesetzt wird, zur Förderung des Schmierstoffes mit einem deutlich geringeren Druck eingesetzt werden.

Weiter ist aus der US 6,736,292 B2 ein mit Druckluft betriebener Motor bekannt, der zur Förderung von Schmierstoff aus einer Kartusche zu einer Schmierstelle eingesetzt werden kann. Der Motor weist dabei eine durch die Druckluft gegen die Kraft einer Feder verschiebbare Kolbenanordnung auf, die in einem Gehäuse oszillierend verschiebbar angeordnet ist und hierdurch einen Pumpenhub eines Pumpenelements erzeugt.

Die Druckschriften US 4,352,644 und 6,494,347 B1 zeigen und beschreiben jeweils pneumatische Schmiervorrichtungen. Im Einzelnen offenbart die Druckschrift US 6,494,347 eine Schmierpistole, welche eine automatische kontinuierliche Zuführvorrichtung aufweist, deren Kolben wechselseitig und automatisch bewegt werden kann. Die Umsteuerung der Kolbenbewegung erfolgt dadurch, dass am Ende einer Hinwärtsbewegung eine Dichtung in eine Aussparung in deren Kolbengehäuse eintritt. Hierdurch wird ein Ausgleichsventil geöffnet und es findet ein Druckausgleich am Kolben statt. Als Ergebnis kann der Kolben durch eine von einer Feder aufgebrachten Kraft zurückbewegt werden. Die in US 4,352,644 beschriebene hydraulische Pumpe weist einen sich hin- und herbewegenden Kolben auf, welcher in eine Richtung durch ein Druckfluid und in die andere Richtung durch eine Feder bewegt wird.

Die in US 2,861,519 offenbarte Schmierpumpe weist einen Hauptkolben auf, welcher die Pumpe je nach Anforderung antreibt. Der Kolben oszilliert so lange, bis das Schmierfett oder ein anderes Schmiermittel, das durch die Pumpe gepumpt wird, verbraucht ist oder kommt zur Ruhe in einem Gleichgewichtszustand. Die Bewegung des Kolbens wird mittels eines Steuerventils und mittels an den Enden des Steuerventils angeordneten Kipphebeln bewirkt.

Aufgabe der vorliegenden Erfindung ist es, eine hydraulische Vorrichtung der eingangs genannten Art mit einer Schmierpumpe zu schaffen, die sich durch eine hohe Zuverlässigkeit bei einfacher Betriebsweise und kostengünstiger Herstellbarkeit auszeichnet.

Diese Aufgabe wird durch eine Vorrichtung mit den Merkmalen des Anspruchs 1 gelöst.

Die Aufgabe wird erfindungsgemäß im Wesentlichen dadurch gelöst, dass eine Kolbenbaugruppe als Mittel zum Erzeugen des Pumpenhubs vorgesehen ist, der Mittel zum Umsteuern der Bewegungsrichtung zumindest eines Elements der Kolbenbaugruppe mit wenigstens einem insbesondere durch zumindest eine nutartige Ausnehmung gebildeten Bypass sowie wenigstens ein elastisches Element, welches die Kolbenbaugruppe in eine erste, dem Hydraulikeinlass zugewandte Richtung beaufschlagt, derart zugerordnet sind, dass die Kolbenbaugruppe zwischen einer eine Fluidverbindung zwischen dem Hydraulikeinlass und einem Hydraulikauslass sperrenden Schließposition und einer diese Fluidverbindung freigebenden Öffnungsposition in einem Grundkörper zum Erzeugen des Pumpenhubs oszillierend verschiebbar ist. Auf diese Weise ist es möglich, das unter Druck stehende Hydraulikfluid, welches bspw. einen hydraulischen Schlaghammer antreibt, auch zur Förderung von Schmierstoff zu Schmierstellen der hydraulischen Vorrichtung einzusetzen.

Erfindungsgemäß weisen die Mittel zum Umsteuern der Bewegungsrichtung einen ersten Bypass und einen zweiten Bypass auf, die beabstandet voneinander insbesondere als nutartige Ausnehmungen ausgebildet sind. Der erste Bypass kann dabei der Kolbenbaugruppe zur Einleitung einer Bewegung eines Elements der Kolbenbaugruppe relativ zu einem weiteren Element der Kolbenbaugruppe zugeordnet sein, während der zweite Bypass das Erreichen einer Endstellung der Kolbenanordnung ermöglicht. Im Vergleich zu Motoren oder dgl., die nur einen Bypass aufweisen, kann bei dieser Ausgestaltung der Hub der Kolbenbaugruppe deutlich verkürzt werden.

Vorzugsweise ist in einem Grundkörper der Schmierpumpe ein durch die in diesem verschiebbar geführte Kolbenbaugruppe in zwei Kammern unterteilter erster Hohlraum definiert, dessen erste Kammer ggf. über ein Ventil und/oder eine Drosseleinrichtung mit dem Hydraulikeinlass und dessen zweite Kammer ggf. über ein Ventil und/oder eine Drosseleinrichtung mit dem Hydraulikauslass verbindbar ist. Durch die Beaufschlagung des Hydraulikeinlasses mit Hydraulikfluid, welches auch zum Betrieb der hydraulische Schlagvorrichtung oder dgl. eingesetzt wird, wird folglich die Kolbenbaugruppe gegen die Kraft des elastischen Elements in dem Grundkörper verschoben. Hierdurch wird von der Kolbenbaugruppe auch das Pumpenelement, bspw. ein Förderkolben, beaufschlagt, so dass Schmierstoff zu einer Schmierstelle befördert wird.

Die Kolbenbaugruppe weist vorzugsweise einen in dem ersten Hohlraum des Grundkörpers geführten äußeren Kolben mit einem in diesem definierten zweiten Hohlraum und einen in diesem zweiten Hohlraum geführten inneren Kolben auf. Dabei ist zwischen der Außenfläche des äußeren Kolbens und der Innenfläche des Grundkörpers ein dritter Hohlraum definiert, der mit dem zweiten Hohlraum in Strömungsverbindung steht. Diese Ausgestaltung der Kolbenbaugruppe ermöglicht es, eine Fluidverbindung zwischen der dem Hydraulikeinlass zugewandten Seite und der dem Hydraulikauslass zugewandten Seite der Kolbenbaugruppe herzustellen, um dadurch eine Umsteuerung der Kolbenbaugruppe zu ermöglichen.

Wenn auf der Außenfläche des äußeren Kolbens wenigsten zwei voneinander beabstandete Dichtelement vorgesehen sind, kann der dritte Hohlraum gegen den ersten Hohlraum, d.h. gegen die beiden durch die Kolbenbaugruppe unterteilten Kammern abgedichtet werden.

Die Umsteuerung der Kolbenbaugruppe kann dadurch erreicht werden, dass der innere Kolben in dem äußeren Kolben zwischen einer Schließposition, die eine Fluidverbindung durch die Kolbenbaugruppe zwischen der dem Hydraulikeinlass zugewandten Seite und der dem Hydraulikauslass zugewandten Seite des äußeren Kolbens sperrt, und einer diese Fluidverbindung freigebenden Öffnungsposition verschiebbar ist. Mit anderen Worten wird die Kolbenbaugruppe durch die Kraft des Hydraulikfluids und gegen die Rückstellkraft des elastischen Elements in eine erste Richtung verschoben, wenn die Kolbenbaugruppe in ihrer Schließposition ist, während die Kolbenbaugruppe in entgegengesetzter Richtung durch die Rückstellkraft des elastischen Elements zurückverschoben werden kann, wenn sich die Kolbenbaugruppe in ihrer Öffnungsposition befindet.

Damit bei der Umsteuerung und der Rückbewegung der Kolbenbaugruppe durch die Kraft des elastischen Elements kein zu starker Druckverlust des Hydraulikfluids auftritt, muss die Umsteuerung und die Rückbewegung der Kolbenbaugruppe möglichst rasch erfolgen. Hierzu ist es vorgesehen, dass der Kolbenbaugruppe wenigstens zwei diese, insbesondere den äußeren Kolben, in Richtung zu der dem Hydraulikeinlass zugewandten Seite beaufschlagende Federn zugeordnet sind. Diese Federn ermöglichen es, die Fluidverbindung durch die Kolbenbaugruppe hindurch rasch zu schließen und die Kolbenbaugruppe in Richtung der dem Hydraulikeinlass zugewandten Seite zurückzudrängen.

Nach einer bevorzugten Ausführungsform der Erfindung sind der dritte Hohlraum und die erste Kammer durch den äußeren Kolben und eine auf diesem vorgesehene Dichtung gegeneinander abdichtbar und über einen sich durch Verschieben des äußeren Kolbens in dem ersten Hohlraum öffnenden ersten Bypass verbindbar. Die Öffnung des ersten Bypasses leitet die Umsteuerung und Rückbewegung der Kolbenbaugruppe ein. Durch die Anordnung des ersten Bypasses wird folglich die Hublänge der Kolbenbaugruppe im Betrieb festgelegt.

Um ein vollständiges Schließen der Fluiddurchgangs durch die Kolbenbaugruppe zu erreichen, sind der dritte Hohlraum und die zweite Kammer durch den äußeren Kolben und eine auf diesem vorgesehene Dichtung gegeneinander abdichtbar und über einen sich durch Verschieben des äußeren Kolbens in dem ersten Hohlraum öffnenden Bypass verbindbar.

Der erste Bypass kann dabei durch eine erste nutartige Ausnehmung in der Innenfläche des Grundkörpers gebildet sein. Der den dritten Hohlraum und die zweite Kammer verbindende Bypass kann entweder ebenfalls durch die erste nutartige Ausnehmung der Innenfläche des Grundkörpers gebildet sein oder alternativ hierzu durch eine zweite nutartig Ausnehmung in der Innenfläche des Grundkörpers gebildet sein, die von der ersten nutartigen Ausnehmung beabstandet angeordnet ist.

Die Förderung des Schmierstoffs zu einer Schmierstelle der hydraulischen Vorrichtung wird dadurch bewirkt, dass das Pumpenelement in einem Kanal, in den ein mit dem Vorratsbehälter strömungsverbundener Einlass mündet, in dem Grundkörper abgedichtet und verschiebbar geführt ist. Dabei ist auf der der Schmierstelle zugewandten Seite in dem Kanal ein Rückschlagventil vorgesehen, welches bei einer Bewegung der Kolbenbaugruppe in Richtung zu dem Hydraulikauslass öffnet und während des Rückhubs der Kolbenbaugruppe schließt.

Weitere Vorteile und Anwendungsmöglichkeiten der Erfindung ergeben sich auch aus der nachfolgenden Beschreibung von Ausführungsbeispielen und der Zeichnung.

Es zeigen schematisch:
- Fig. 1: einen Längsschnitt durch eine Schmierpumpe nach einer ersten Ausführungsform der Erfindung,
- Fig. 2: einen Querschnitt durch die Schmierpumpe nach Fig. 1,
- Fig. 3: einen weiteren Querschnitt durch die Schmierpumpe nach Fig. 1 und
- Fig. 4: einen Längsschnitt durch eine Schmierpumpe nach einer zweiten Ausführungsform der Erfindung.

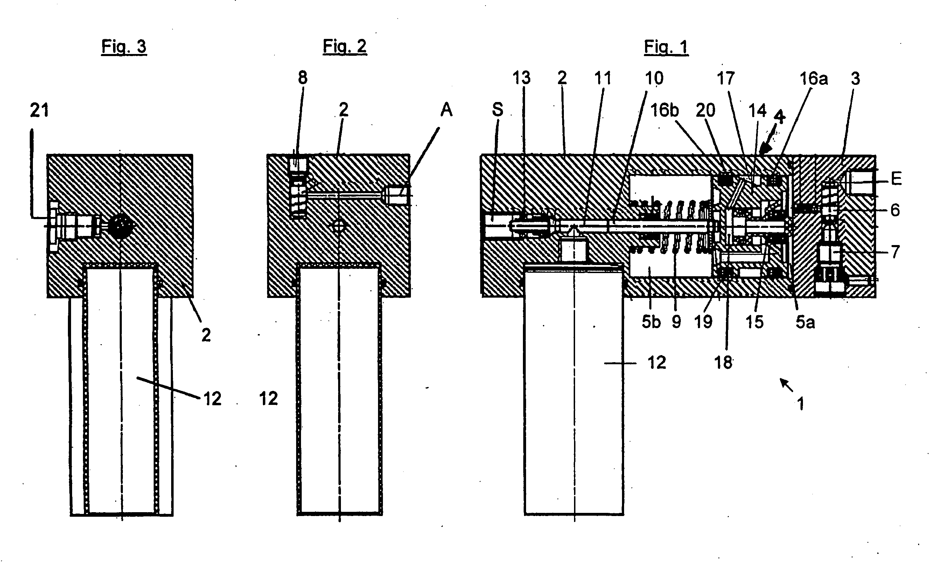

Die in den Figuren 1 bis 3 dargestellte Schmierpumpe 1 ist durch einen als Pumpengehäuse 2 gestalteten Grundkörper gebildet, der durch ein Steuergehäuse 3 verschlossen ist. In dem Grundkörper 2, 3 ist eine Kolbenbaugruppe 4 verschiebbar geführt, so dass ein in dem Grundkörper 2 ausgebildeter erster Hohlraum in zwei Kammern 5a und 5b unterteilt wird. In die in Figur 1 rechte Kammer 5a mündet über ein Ventil 6 und eine Drosseleinrichtung 7 ein Hydraulikeinlass E, der mit einer Zuleitung für ein unter Druck stehendes Hydraulikfluid zum Antrieb eines hydraulischen Schlaghammers oder einer anderen hydraulischen Vorrichtung verbunden ist. In gleicher Weise ist die in Figur 1 linke Kammer 5b über eine Drosseleinrichtung 8 mit einem Hydraulikauslass A verbunden.

Die Kolbenbaugruppe 4 ist in dem Grundkörper 2 durch eine Druckfeder 9 gegen das Steuergehäuse 3 vorgespannt. Mit anderen Worten beaufschlagt die Druckfeder 9 die Kolbenbaugruppe 4 in Figur 1 nach rechts. Weiter steht die Kolbenbaugruppe 4 mit einem als Pumpenelement wirkenden Förderkolben 10 in Kontakt, der in einem Kanal 11 in dem Grundkörper 2 abgedichtet und verschiebbar geführt ist. In den Kanal 11 mündet ein Einlass einer Kartusche 12, die als Vorratsbehälter für Schmierstoff dient. Auf der in Figur 1 linken Seite ist in dem Grundkörper 2 ein Schmierstoffauslass S vorgesehen, welcher gegenüber dem Kanal 11 durch ein Rückschlagventil 13 abdichtbar ist. Das Rückschlagventil 13 ist dabei derart angeordnet, dass es eine Strömung von dem Schmierstoffauslass S in Richtung zu dem Kanal 11 sperrt, während Schmierstoff aus der Kartusche 12 durch den Kanal 11 in den Schmierstoffauslass S strömen kann. Der Schmierstoffauslass S ist mit einer oder mehreren Schmierstellen der hydraulischen Vorrichtung verbunden.

Die Kolbenbaugruppe 4 ist durch einen äußeren Kolben 14 sowie einen inneren Kolben 15 gebildet. Der äußere Kolben 14 ist dabei in dem die beiden Kammern 5a und 5b bildenden Hohlraum in dem Grundkörper 2 verschiebbar geführt und über zwei Dichtungen 16a und 16b gegenüber den Kammern 5a bzw. 5b abgedichtet. Zwischen den Dichtungen 16a und 16b ist in dem äußeren Kolben 14 eine Ausnehmung vorgesehen, so dass ein Hohlraum 17 zwischen der Innenfläche des Grundkörpers 2 und der Außenfläche des äußeren Kolbens 14 gebildet wird. Dieser Hohlraum 17 steht über einen Kanal in dem äußeren Kolben 14 mit einem weiteren Hohlraum 18 in Verbindung, der im Inneren des äußeren Kolbens 14 geführt ist. In dem weiteren Hohlraum 18 ist der innere Kolben 15 verschiebbar geführt. Dabei ist ein weiterer Kanal 19 in dem äußeren Kolben 14 derart angeordnet, dass die dem Hydraulikauslass A zugewandte Kammer 5b mit dem weiteren Hohlraum 18 im Inneren des äußeren Kolbens 14 verbunden wird. Dabei verhindert der innere Kolben 15 jedoch eine Strömung zwischen der Ausnehmung 17 und der Kammer 5b. Allerdings kann der innere Kolben 15 von einem an dem äußeren Kolben 14 vorgesehenen Ventilsitz abgehoben werden, um eine Strömungsverbindung zwischen der dem Hydraulikeinlass E zugewandten Kammer 5a und dem weiteren Kanal 19 durch den weiteren Hohlraum 18 hindurch zu ermöglichen.

In der Innenwand des Grundkörpers 2 ist eine nutartige Ausnehmung 20 vorgesehen, die derart ausgebildet ist, dass sie einen Bypass bildet, um eine Fluidströmung an den Dichtungen 16a bzw. 16b vorbei von der Kammer 5a in den Hohlraum der Ausnehmung 17 oder von dem Hohlraum der Ausnehmung 17 in die Kammer 5b zu ermöglichen. Wie aus Figur 3 ersichtlich ist, kann ein Sicherheitsventil 21 in dem Grundkörper 2 vorgesehen sein.

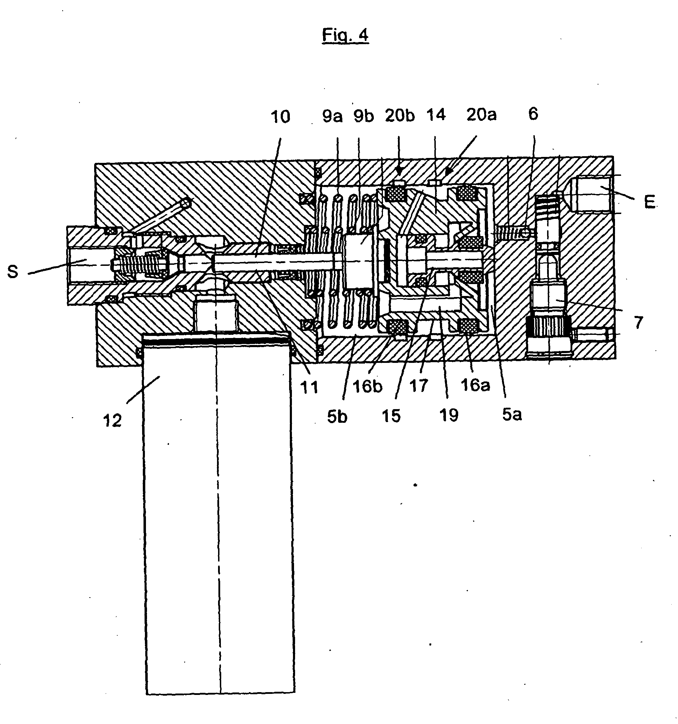

In Figur 4 ist eine weitere Ausführungsform einer Schmierstoffpumpe dargestellt. Der wesentliche Aufbau dieser Schmierstoffpumpe ist mit dem oben unter Bezugnahme auf die Figuren 1 bis 3 beschriebenen Aufbau identisch. Die Teilungsebene des Grundkörpers ist jedoch im Vergleich zu der Ausführungsform nach Figur 1 nach links verlagert.

Weiter sind in dem Hohlraum, der die beiden Kammern 5a und 5b bildet, zwei nutartige Ausnehmungen 20a und 20b beabstandet voneinander vorgesehen, wobei die in der Figur rechte Ausnehmung 20a einen ersten Bypass bildet, wenn die Kolbenbaugruppe 4 soweit nach links verschoben ist, dass die Dichtung 16a im Bereich der nutartigen Ausnehmung 20a liegt. Hierdurch kann Hydraulikfluid aus der Kammer 5a durch den Bypass 20a in den durch die Ausnehmung 17 gebildeten Hohlraum strömen. Andererseits ist die in der Figur linke Ausnehmung 20b derart angeordnet, dass diese einen zweiten Bypass bildet, wenn die Dichtung 16b sich in der in Figur 4 gezeigten Stellung befindet. Hierdurch wird eine Strömung aus dem durch die Ausnehmung 17 gebildeten Hohlraum durch den Bypass 20b in die Kammer 5b ermöglicht.

Durch die Ausbildung der Schmierstoffpumpe mit zwei nutartigen Ausnehmungen 20a, 20b, die jeweils einen Bypass bilden, kann im Vergleich zu der in den Figuren 1 bis 3 dargestellten Ausführungsform der Hub der Kolbenbaugruppe verkürzt werden.

Der Kolbenbaugruppe 4 sind in der Ausführungsform nach Figur 4 zwei koaxial zueinander angeordnete Druckfedern 9a und 9b zugeordnet, welche beide den äußeren Kolben 14 in der Figur nach rechts, d.h. in Richtung zu dem Hydraulikeinlass E hin, beaufschlagen. Hierdurch wird ein besonders rascher Rückhub der Kolbenbaugruppe 4 erreicht.

Nachfolgend wird die Funktionsweise der Schmierpumpe näher erläutert. Über den Hydraulikeinlass E wird bspw. Hydrauliköl, welches auch zum Antrieb einer in den Figuren nicht gezeigten hydraulischen Vorrichtung, z.B. eines Schlaghammers, eingesetzt wird, der Schmierpumpe zugeführt. Das Hydrauliköl strömt dabei durch die Drosseleinrichtung 7 und das Rückschlagventil 6 in die Kammer 5a. Durch den Druck des Hydrauliköls wird die Kolbenbaugruppe 4 aus der in den Figuren 1 bzw. 4 dargestellten Position gegen die Kraft der Druckfedern bzw. 9a und 9b nach links verschoben. Die Drosseleinrichtung 7 ist dabei vorzugsweise derart eingestellt, dass sich die Kolbenbaugruppe 4 nur sehr langsam bewegt. Der innere Kolben 15 wird dabei in seinen Ventilsitz in dem äußeren Kolben 14 gepresst, so dass das Hydrauliköl nicht zwischen dem inneren Kolben 15 und dem äußeren Kolben 14 hindurchströmen kann.

Durch die Bewegung der Kolbenbaugruppe 4 wird auch der Förderkolben 10 in den Figuren 1 und 4 nach links verschoben. Hierdurch wird der in dem Kanal 11 befindliche Schmierstoff durch das Rückschlagventil 13 zu dem Schmierstoffauslass S gefördert, der mit einer nicht dargestellten Schmierstelle des Schlaghammers oder dgl. verbunden ist. Sobald die Dichtung 16 a in Figur 1 die nutartige Ausnehmung 20 erreicht, strömt das Hydrauliköl auch durch den durch die nutartige Ausnehmung 20 gebildeten Bypass an der Dichtung 16a vorbei in den Hohlraum der Ausnehmung 17 und somit auch in den weiteren Hohlraum 18 im Inneren des äußeren Kolbens 14. Hierdurch wird der innere Kolben 15 von seinem Ventilsitz in dem äußeren Kolben 14 abgehoben und relativ zu dem äußeren Kolben 14 in den Figuren nach rechts verschoben. Bei der Ausführungsform nach Figur 4 wird diese Öffnung des inneren Kolbens 15 in dem äußeren Kolben 14 dadurch erreicht, dass die Dichtung 16a die nutartige Ausnehmung 20a erreicht und auf diese Weise der Bypass eröffnet wird.

Das Hydrauliköl kann nun durch den Kanal 19 durch die Kolbenbaugruppe 4 hindurchströmen, so dass ein Druckausgleich zwischen den Kammern 5a und 5b stattfinden kann. Die Federn 9 bzw. 9a und 9b sind derart ausgelegt, dass die gesamte Kolbenbaugruppe 4 möglichst schnell wieder in den Figuren 1 und 4 nach rechts verschoben wird, wodurch auch der innere Kolben 15 wieder gegen seinen Ventilsitz in dem äußeren Kolben 14 gepresst wird. Hierbei kann das in dem weiteren Hohlraum 18 befindliche Hydrauliköl durch einen Bypass in die Kammer 5b strömen, wenn die Dichtung 16b die nutartige Ausnehmung 20 bzw. 20b erreicht. Erst wenn das Hydrauliköl aus dem weiteren Hohlraum 18 herausgedrückt wurde, kann der innere Kolben 15 abdichtend an dem Ventilsitz in dem äußeren Kolben 14 anliegen. Der Förderkolben 10 wird dabei ebenfalls in den Figuren 1 und 4 nach rechts bewegt, so dass Schmiermittel aus der Kartusche 12 in den Kanal 11 angesaugt wird. Die Schmierpumpe befindet sich damit wieder in ihrer in den Figuren 1 und 4 gezeigten Ausgangsposition, so dass ein neuer Hub der Kolbenbaugruppe 4 beginnen kann.

### Bezugszeichenliste:

- 1: Schmierpumpe
- 2: Grundkörper (Pumpengehäuse)
- 3: Steuergehäuse
- 4: Kolbenbaugruppe
- 5a, 5b: Kammer
- 6: Ventil
- 7: Drosseleinrichtung
- 8: Drosseleinrichtung
- 9: Druckfeder
- 9a, 9b: Druckfeder
- 10: Förderkolben (Pumpenelement)
- 11: Kanal
- 12: Kartusche
- 13: Ventil
- 14: äußerer Kolben
- 15: innerer Kolben
- 16a, 16b: Dichtung
- 17: Ausnehmung (Hohlraum)
- 18: Hohlraum
- 19: Kanal
- 20, 20a, 20b: Bypass/Ausnehmung
- 21: Sicherheitsventil

- A: Hydraulikauslass
- E: Hydraulikeinlass
- S: Schmierstoffauslass

## Patentansprüche

1. Hydraulische Vorrichtung, insbesondere hydraulische Schlagvorrichtung, mit einer Zuleitung für ein unter Druck stehendes Hydraulikfluid, insbesondere Hydrauliköl, und mit einer Schmierpumpe (1), die mit der Zuleitung über einen Hydraulikeinlass (E) strömungsverbunden ist, und die ein Pumpenelement (10) zur Förderung von Schmierstoff, z.B. Schmierfett, aus einem Vorratsbehälter (12) zu mindestens einer mit Schmierstoff zu versorgenden Schmierstelle der hydraulischen Vorrichtung und Mittel zum Erzeugen eines Pumpenhubs des Pumpenelements (10) aufweist, wobei als Mittel zum Erzeugen eines Pumpenhubs eine Kolbenbaugruppe (4) vorgesehen ist, der Mittel zum Umsteuern der Bewegungsrichtung zumindest eines Elements der Kolbenbaugruppe (4) mit wenigstens einem insbesondere durch zumindest eine nutartige Ausnehmung (20) gebildeten Bypass (20) sowie wenigstens ein elastisches Element (9; 9a, 9b), welches die Kolbenbaugruppe (4) in eine erste, dem Hydraulikeinlass (E) zugewandte Richtung beaufschlagt, derart zugeordnet sind, dass die Kolbenbaugruppe (4) zwischen einer eine Fluidverbindung zwischen dem Hydraulikeinlass (E) und einem Hydraulikauslass (A) sperrenden Schließposition und einer diese Fluidverbindung freigebenden Öffnungsposition in einem Grundkörper (2, 3) zum Erzeugen des Pumpenhubs oszillierend verschiebbar ist, **dadurch gekennzeichnet, dass** die Mittel zum Umsteuern der Bewegungsrichtung einen ersten Bypass (20a) und einen zweiten Bypass (20b) aufweisen, die beabstandet voneinander insbesondere als nutartige Ausnehmungen (20a, 20b) ausgebildet sind.

2. Hydraulische Vorrichtung nach Anspruch 1, **dadurch gekennzeichnet, dass** im Grundkörper (2, 3) der Schmierpumpe (1) ein durch die in diesem verschiebbar geführte Kolbenbaugruppe (4) in zwei Kammern (5a, 5b) unterteilter erster Hohlraum definiert ist, dessen erste Kammer (5a) ggf. über ein Ventil (6) und/oder eine Drosseleinrichtung (7) mit dem Hydraulikeinlass (E) und dessen zweite Kammer (5b) ggf. über ein Ventil und/oder eine Drosseleinrichtung (8) mit dem Hydraulikauslass (A) verbindbar ist.

3. Hydraulische Vorrichtung nach einem der Ansprüche 1 oder 2, **dadurch gekennzeichnet, dass** die Kolbenbaugruppe (4) einen in dem ersten Hohlraum des Grundkörpers (2, 3) geführten äußeren Kolben (14) mit einem in diesem definierten zweiten Hohlraum (18) und einen in diesem zweiten Hohlraum (18) geführten inneren Kolben (15) aufweist, wobei zwischen der Außenfläche des äußeren Kolbens (14) und der Innenfläche des Grundkörpers (2, 3) ein dritter Hohlraum (17) definiert ist, der mit dem zweiten Hohlraum (18) in Strömungsverbindung steht.

4. Hydraulische Vorrichtung nach Anspruch 3, **dadurch gekennzeichnet, dass** auf der Außenfläche des äußeren Kolbens (14) wenigstens zwei voneinander beabstandete Dichtelemente (16a, 16b) vorgesehen sind, welche den dritten Hohlraum (17) gegen den ersten Hohlraum abdichten.

5. Hydraulische Vorrichtung nach einem der Ansprüche 3 oder 4, **dadurch gekennzeichnet, dass** der innere Kolben (15) in dem äußeren Kolben (14) zwischen einer eine Fluidverbindung durch die Kolbenbaugruppe (4) zwischen der dem Hydraulikeinlass (E) zugewandten Seite und der dem Hydraulikauslass (A) zugewandten Seite des äußeren Kolbens (14) sperrenden Schließposition und einer diese Fluidverbindung freigebenden Öffnungsposition verschiebbar ist.

6. Hydraulische Vorrichtung nach einem der Ansprüche 3 bis 5, **dadurch gekennzeichnet, dass** der Kolbenbaugruppe (4) wenigstens zwei diese, insbesondere den äußeren Kolben (14), in Richtung zu der dem Hydraulikeinlass (E) zugewandten Seite beaufschlagende Federn (9; 9a, 9b) zugeordnet sind.

7. Hydraulische Vorrichtung nach einem der Ansprüche 3 bis 6, **dadurch gekennzeichnet, dass** der dritte Hohlraum (17) und die erste Kammer (5a) durch den äußeren Kolben (14) und eine auf diesem vorgesehene Dichtung (16a) gegeneinander abdichtbar und über einen sich durch Verschieben des äußeren Kolbens (14) in dem ersten Hohlraum öffnenden ersten Bypass (20; 20a) verbindbar sind.

8. Hydraulische Vorrichtung nach einem der Ansprüche 3 bis 7, **dadurch gekennzeichnet, dass** der dritte Hohlraum (17) und die zweite Kammer (5b) durch den äußeren Kolben (14) und eine auf diesem vorgesehene Dichtung (16b) gegeneinander abdichtbar und über einen sich durch Verschieben des äußeren Kolbens (14) in dem ersten Hohlraum öffnenden Bypass (20; 20b) verbindbar sind.

9. Hydraulische Vorrichtung nach einem der Ansprüche 7 oder 8, **dadurch gekennzeichnet, dass** der erste Bypass (20; 20a) durch eine erste nutartige Ausnehmung (20; 20a) in der Innenfläche des Grundkörpers gebildet ist.

10. Hydraulische Vorrichtung nach einem der Ansprüche 8 oder 9, **dadurch gekennzeichnet, dass** der den dritten Hohlraum (17) und die zweite Kammer (5b) verbindende Bypass (20) durch die erste nutartige Ausnehmung (20) in der Innenfläche des Grundkörpers (2, 3) gebildet ist.

11. Hydraulische Vorrichtung nach einem der Ansprüche 8 oder 9, **dadurch gekennzeichnet, dass** der den dritten Hohlraum (17) und die zweite Kammer (5b) verbindende Bypass (20b) durch eine zweite nutartige Ausnehmung (20b) in der Innenfläche des Grundkörpers (2, 3) gebildet ist, die von der ersten nutartigen Ausnehmung (20a) beabstandet angeordnet ist.

12. Hydraulische Vorrichtung nach einem der vorhergehenden Ansprüche, **dadurch gekennzeichnet, dass** das Pumpenelement (10) zur Förderung von Schmierstoff in einem Kanal (11), in den ein mit dem Vorratsbehälter (12) strömungsverbundener Einlass mündet, in dem Grundkörper (2, 3) abgedichtet und verschiebbar geführt ist, und dass auf der der Schmierstelle zugewandten Seite in dem Kanal (11) ein Rückschlagventil (13) vorgesehen ist.

## Claims

1. A hydraulic device, particularly a hydraulic percussion device, with a supply line for a compressed hydraulic fluid, particularly hydraulic oil, and with a lubricating pump (1) that is fluidically connected to the supply line via a hydraulic inlet (E) and features a pump element (10) for conveying lubricant such as, e.g., lubricating grease from a reservoir (12) to at least one lubricating point of the hydraulic device to be supplied with lubricant, as well as means for generating a pump stroke of the pump element (10), wherein the means for generating a pump stroke consist of a piston assembly (4) that is assigned means for reversing the moving direction of at least one element of the piston assembly (4) with at least one bypass (20) in the form of, in particular, at least one groove-like recess (20), as well as at least one elastic element (9, 9a, 9b) that acts upon the piston assembly (4) in a first direction facing the hydraulic inlet (E), namely in such a way that the piston assembly (4) can be displaced in a base body (2, 3) in an oscillating fashion between a closing position, in which a fluid connection between the hydraulic inlet (E) and a hydraulic outlet (A) is blocked, and an opening position, in which this fluid connection is released, in order to generate the pump stroke, **characterized in that** the means for reversing the moving direction feature a first bypass (20a) and a second bypass (20b) that are realized, in particular, in the form of groove-like recesses (20a, 20b) and spaced apart from one another.

2. The hydraulic device according to Claim 1, **characterized in that** a first cavity is defined in the base body (2, 3) of the lubricating pump (1) and divided into two chambers (5a, 5b) by the piston assembly (4) displaceably guided therein, wherein the first chamber (5a) of this first cavity can be connected to the hydraulic inlet (E), if applicable, via a valve (6) and/or a throttle device (7) and the second chamber (5b) of said cavity can be connected to the hydraulic outlet (A), if applicable, via a valve and/or a throttle device (8).

3. The hydraulic device according to one of Claims 1 or 2, **characterized in that** the piston assembly (4) features an outer piston (14) that is guided in the first cavity of the base body (2, 3) and features a second cavity (18) defined therein, wherein a third cavity (17) is defined between the outside surface of the outer piston (14) and the inside surface of the base body (2, 3) and fluidically connected to the second cavity (18).

4. The hydraulic device according to Claim 3, **characterized in that** at least two sealing elements (16a, 16b) that seal the third cavity (17) relative to the first cavity are provided on the outside surface of the outer piston (14) and spaced apart from one another.

5. The hydraulic device according to one of Claims 3 or 4, **characterized in that** the inner piston (15) can be displaced in the outer piston (14) between a closing position, in which a fluid connection between the side of the outer piston (14) facing the hydraulic inlet (E) and the side facing the hydraulic outlet (A) is blocked by the piston assembly (4), and an opening position, in which this fluid connection is released.

6. The hydraulic device according to one of Claims 3 to 5, **characterized in that** the piston assembly (4) is assigned at least two springs (9; 9a, 9b) that act upon the piston assembly, particularly the outer piston (14), in the direction toward the side facing the hydraulic inlet (E).

7. The hydraulic device according to one of Claims 3 to 6, **characterized in that** the third cavity (17) and the first chamber (5a) can be sealed relative to one another by the outer piston (14) and a seal (16a) provided thereon and connected to one another via a first bypass (20; 20a) that is opened by displacing the outer piston (14) in the first cavity.

8. The hydraulic device according to one of Claims 3 to 7, **characterized in that** the third cavity (17) and the second chamber (5b) can be sealed relative to one another by the outer piston (14) and a seal (16b) provided thereon and connected to one another via a bypass (20; 20b) that is opened by displacing the outer piston (14) in the first cavity.

9. The hydraulic device according to one of Claims 7 or 8, **characterized in that** the first bypass (20; 20a) is realized in the form of a first groove-like recess (20; 20a) in the inside surface of the base body.

10. The hydraulic device according to one of Claims 8 or 9, **characterized in that** the bypass (20) connecting the third cavity (17) and the second chamber (5b) is realized in the form of a first groove-like recess (20) in the inside surface of the base body (2, 3).

11. The hydraulic device according to one of Claims 8 or 9, **characterized in that** the bypass (20b) connecting the third cavity (17) and the second chamber (5b) is realized in the form of a second groove-like recess (20b) in the inside surface of the base body (2, 3) that is spaced apart from the first groove-like recess (20a).

12. The hydraulic device according to one of the preceding claims, **characterized in that** the pump element (10) for conveying lubricant is guided in the base body (2, 3) in a sealed and displaceabe fashion in a channel (11), into which an inlet that is fluidically connected to the reservoir (12) discharges, and **in that** a check valve (13) is provided in the channel (11) on the side facing the lubricated point.

## Revendications

1. Dispositif hydraulique, notamment percuteur hydraulique, comportant une conduite d'amenée d'un fluide hydraulique pressurisé, notamment de l'huile hydraulique, et comportant une pompe de lubrification (1), qui est reliée en écoulement à la conduite d'amenée par l'intermédiaire d'une admission hydraulique (E) et qui présente un élément de pompe (10) pour transporter du lubrifiant, par ex. de la graisse lubrifiante, depuis un récipient de stockage (12) vers au moins un emplacement de lubrification à alimenter en lubrifiant du dispositif hydraulique et des moyens pour produire un coup de l'élément de pompe (10), dans lequel comme moyens pour produire un coup de pompe, un module de piston (4) est prévu, auquel des moyens pour inverser la direction de mouvement d'au moins un élément du module de piston (4) avec au moins une dérivation (20) formée par au moins un évidement (20) de type rainure ainsi qu'au moins un élément élastique (9 ;9a, 9b), qui sollicite le module de piston (4) dans une première direction tournée vers l'admission hydraulique (E), sont coordonnés de telle sorte que le module de piston (4) soit déplaçable entre une position de fermeture fermant une liaison de fluide entre l'admission hydraulique (E) et un échappement hydraulique (A) et une position d'ouverture ouvrant cette liaison de fluide dans un corps de base (2,3) afin de produire le coup de pompe par oscillation, **caractérisé en ce que** les moyens pour inverser la direction de mouvement présentent une première dérivation (20a) et une deuxième dérivation (20b), qui sont configurées en étant espacées l'une de l'autre comme des évidements (20a,20b) de type rainure.

2. Dispositif hydraulique selon la revendication 1, **caractérisé en ce que** dans le corps de base (2,3) de la pompe de lubrification, un premier espace creux divisé en deux chambres (5a,5b) par le module de piston (4) guidé de manière déplaçable dans celui-ci est défini, dont la première chambre (5a) peut être reliée le cas échéant par l'intermédiaire d'une soupape (6) et/ou d'un dispositif d'étranglement (7) à l'admission hydraulique (E) et dont la deuxième chambre peut être reliée le cas échéant par l'intermédiaire d'une soupape et/ou d'un dispositif d'étranglement (8) à l'échappement hydraulique (A).

3. Dispositif hydraulique selon une des revendications 1 ou 2, **caractérisé en ce que** le module de piston (4) présente un piston (14) extérieur guidé dans le premier espace creux du corps de base (2,3) avec un deuxième espace creux (18) défini dans celui-ci et un piston (18) intérieur guidé dans ce deuxième espace creux (18), dans lequel entre la surface extérieure du piston extérieur (14) et la surface intérieure du corps de base (2,3) un troisième espace creux (17) est défini, lequel est en liaison d'écoulement avec le deuxième espace creux (18).

4. Dispositif hydraulique selon la revendication 3, **caractérisé en ce que** sur la surface extérieure du piston extérieur (14), au moins deux éléments d'étanchéité (16a,16b) espacés l'un de l'autre sont prévus, lesquels isolent de manière étanche le troisième espace creux (17) par rapport au premier espace creux.

5. Dispositif hydraulique selon une des revendications 3 ou 4, **caractérisé en ce que** le piston intérieur (15) est déplaçable dans le piston extérieur (14) entre une position de fermeture fermant la liaison de fluide à travers le module de piston (4) entre le côté tourné vers l'admission hydraulique (E) et le côté tourné vers l'échappement hydraulique (A) du piston extérieur (14) et une position d'ouverture ouvrant cette liaison de fluide.

6. Dispositif hydraulique selon une des revendications 3 à 5, **caractérisé en ce que** le module de piston (4) est coordonné à au moins deux ressorts (9 ;9a,9b) sollicitant celui-ci, notamment le piston extérieur (14), dans la direction du côté tourné vers l'admission hydraulique (E).

7. Dispositif hydraulique selon une des revendications 3 à 6, **caractérisé en ce que** le troisième espace creux (17) et la première chambre (5a) peuvent être isolés de manière étanche l'un par rapport à l'autre par le piston extérieur (14) et un joint d'étanchéité (16a) prévu sur celui-ci et peuvent être reliés par une première dérivation (20 ;20a) s'ouvrant dans le premier espace creux par déplacement du piston extérieur (14).

8. Dispositif hydraulique selon une des revendications 3 à 7, **caractérisé en ce que** le troisième espace creux (17) et la deuxième chambre (5b) peuvent être isolés de manière étanche l'un par rapport à l'autre par le piston extérieur (14) et un joint d'étanchéité (16b) prévu sur celui-ci et peuvent être reliés par une dérivation (20 ;20b) s'ouvrant dans le premier espace creux par déplacement du piston extérieur (14).

9. Dispositif hydraulique selon une des revendications 7 ou 8, **caractérisé en ce que** la première dérivation (20 ;20a) est formée par un premier évidement de type rainure (20 ;20a) dans la surface intérieure du corps de base.

10. Dispositif hydraulique selon une des revendications 8 ou 9, **caractérisé en ce que** la dérivation (20) reliant le troisième espace creux (17) et la deuxième chambre (5b) est formée par le premier évidement (20) de type rainure dans la surface intérieure du corps de base (2,3).

11. Dispositif hydraulique selon une des revendications 8 ou 9, **caractérisé en ce que** la dérivation (20b) reliant le troisième espace creux (17) et la deuxième chambre (5b) est formée par un deuxième évidement (20b) de type rainure dans la surface intérieure du corps de base (2,3), qui est disposé en espacement par rapport au premier évidement de type rainure (20a).

12. Dispositif hydraulique selon une des revendications précédentes, **caractérisé en ce que** l'élément de pompe (10) est prévu pour transporter du lubrifiant dans un canal (11), dans lequel une admission reliée en écoulement au récipient de stockage (12) débouche, est guidé de manière déplaçable et étanche dans la corps de base (2,3), et **en ce que** une soupape anti-retour (13) est prévue dans le canal (11) sur le côté qui se tourne vers l'emplacement de lubrification.
